(19) Europäisches Patentamt
European Patent Office
Office européen des brevets

(11) **EP 3 222 638 B1**

(12) **EUROPEAN PATENT SPECIFICATION**

(45) Date of publication and mention
of the grant of the patent:
**02.09.2020 Bulletin 2020/36**

(21) Application number: **15861386.9**

(22) Date of filing: **18.11.2015**

(51) Int Cl.:
*C08F 8/46* *(2006.01)*     *B32B 27/32* *(2006.01)*
*B29C 45/00* *(2006.01)*     *C08L 23/26* *(2006.01)*
*C09J 123/26* *(2006.01)*

(86) International application number:
**PCT/JP2015/082357**

(87) International publication number:
**WO 2016/080425 (26.05.2016 Gazette 2016/21)**

(54) **MODIFIED ETHYLENIC POLYMER, ADHESIVE RESIN COMPOSITION, LAMINATE, AND USE OF SAME**

MODIFIZIERTES ETHYLENPOLYMER, KLEBEHARZZUSAMMENSETZUNG, LAMINAT UND VERWENDUNG DAVON

POLYMÈRE ÉTHYLÉNIQUE MODIFIÉ, COMPOSITION DE RÉSINE ADHÉSIVE, STRATIFIÉ ET UTILISATION DE CEUX-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2014 JP 2014233422**

(43) Date of publication of application:
**27.09.2017 Bulletin 2017/39**

(73) Proprietor: **Mitsui Chemicals, Inc.**
**Minato-ku**
**Tokyo 105-7122 (JP)**

(72) Inventors:
• **MAEDA, Takahiro**
**Ichihara-shi**
**Chiba 299-0108 (JP)**
• **MATSUMOTO, Hironori**
**Shanghai 200120 (CN)**
• **SAKUMA, Takashi**
**Ichihara-shi**
**Chiba 299-0108 (JP)**

(74) Representative: **Hoffmann Eitle**
**Patent- und Rechtsanwälte PartmbB**
**Arabellastraße 30**
**81925 München (DE)**

(56) References cited:
EP-A1- 0 896 026     EP-A1- 2 690 150
EP-A2- 0 834 415     WO-A1-2012/133008
JP-A- 2003 073 506   JP-A- 2007 285 127
JP-A- 2008 045 122   JP-A- 2010 106 263
JP-A- 2011 016 911   US-A1- 2007 241 557

EP 3 222 638 B1

**Description**

**TECHNICAL FIELD**

The present invention relates to modified ethylene polymers and uses thereof. Specifically, the present invention relates to modified ethylene polymers capable of providing adhesive resin compositions having high fuel barrier property and excellent adhesion and mechanical strength, and laminates containing the polymers.

**BACKGROUND ART**

Polyethylene resins have come to be widely used for fuel tanks for automobiles as well in recent years. Since polyethylene resins have large fuel permeability, a method is adopted in which a resin superior to the polyethylene resin in gas barrier property, such as an ethylene·vinyl acetate copolymer saponification product (hereinafter called "EVOH"), is laminated on the polyethylene resin. At this time, because of significantly low adhesion between polyethylene and EVOH, polyethylene has adhered to EVOH through an adhesive resin such as a modified product that polyethylene is graft-modified with a carboxylic acid, and thereby a multilayer fuel tank has been provided (Patent Literature 1).

Meanwhile, a tubular joint to be mounted on the upper part of the fuel tank and connected to an outer tube has been desired to have excellent sealability as well as excellent mechanical strength and impact resistance. For such a tubular joint, a tubular joint having a two-layer structure consisting of a polyamide and a polyethylene resin has been proposed (Patent Literature 2).

EP 2 690 150 A1 describes an adhesive resin composition suitable for a multilayer structure that includes a modified ethylene polymer (A1) which is graft-modified with an unsaturated carboxylic acid or a derivative thereof and which has a density of 930 to 980 kg/m$^3$, and an unmodified ethylene polymer (A2) having a density of 910 to 929 kg/m$^3$, wherein the adhesive resin composition has a melt flow rate (MFR) [ASTM D 1238 (temperature: 190°C, 2160 g load)] of 0.1 to 3 g/10 min and a density of 920 to 930 kg/m$^3$ and has an elution amount of 60 wt% or less at 85°C or lower as determined by cross-fractionation chromatography. It also describes a multilayer structure formed by using the adhesion resin composition.

US 2007/0241557 A1 describes a joint part having a multi-layer structure including a barrier layer and at least one of an inner layer and an outer layer coaxially laminated on an inner periphery and/or an outer periphery of the barrier layer, respectively, wherein the barrier layer is formed by a compound material composed of one or more of fuel permeation-resistant resin, such as EVOH, PA, polyester or LCP, and polyethylene, while the inner layer and the outer layer are composed of HDPE or modified HDPE.

EP 0 834 415 A2 describes a multilayer plastic container comprising a layer (A) of a modified ethylene polymer composition, which is graft-modified with an unsaturated carboxylic acid or derivative thereof and has a melt flow rate (MFR), measured in accordance with ASTM D1238 (at 190 °C under a load of 2160 g), of 0.1 to 3.0 g/10 minutes, a density of 0.920 to 0.930 g/cm$^3$ and an n-decane insoluble content of 2 to 40 % by weight at 90 °C.

EP 0 896 026 A1 describes adhesive compositions comprising 4-methyl-1-pentene polymers used in bonding a 4-methyl-1-pentene polymer layer and a polar-group-containing resin layer, and laminates obtained by using such compositions. The 4-methyl-1-pentene polymer compositions as these adhesive compositions comprise a 4-methyl-1-pentene polymer (A); and a modified polyolefin resin (B) comprising a mixture of an unsaturated carboxylic acid-modified α-olefin polymer (B-1) whose α-olefin is selected from a group of propylene, butene-1 and 4-methyl-1-pentene and an unsaturated carboxylic acid-modified ethylene/α-olefin copolymer (B-2). In the compositions, an unsaturated carboxylic acid-modified 4-methyl-1-pentene polymer (A') showing a particular modification rate and a particular melt flow rate may be used in place of (A) and (B-1).

**CITATION LIST**

**PATENT LITERATURE**

[Patent Literature 1] JP-A-H 10-156978
[Patent Literature 2] JP-A-2004-293324

## SUMMARY OF THE INVENTION

### TECHNICAL PROBLEM

For peripheral members of tanks, such as valves and tubular joints, laminates composed of a gas barrier resin and a modified ethylene polymer have been used as described above, and it has been practice to heat and re-melt (weld) the modified ethylene polymer part in order to cause the peripheral members of the tanks to be fused onto the polyethylene gasoline tanks via the modified ethylene polymer part. Nonetheless, more strict demand for plastic fuel tanks to have fuel permeation inhibition performance has made it difficult for conventional art to meet such a demand.

It is therefore an object of the present invention to provide modified ethylene polymers having excellent adhesive force with e.g., polyethylene constituting e.g., gasoline tanks, and excellent mechanical strength as well as having good fuel barrier property, and also provide laminates containing such modified ethylene polymers.

### TECHNICAL SOLUTION

The present inventors have their earnest studies and have found that the above problem will be solved and superior effects will be achieved by adhesive resin compositions containing a modified ethylene polymer having specific properties and laminates obtained from such adhesive resin compositions, thereby completing the present invention.

Specifically, configurations of the present invention are as follows.

[1] A modified ethylene polymer in which at least part of the ethylene polymer is graft-modified with an unsaturated carboxylic acid or a derivative thereof, wherein the modified ethylene polymer has a graft modification of 0.15% by weight to 0.40% by weight, and has an elution amount in o-dichlorobenzene at 80°C or lower as determined by cross-fractionation chromatography that is not more than 10% by weight, and wherein at least part of the ethylene polymer is obtained by polymerization performed in the presence of a metallocene catalyst.

[2] An adhesive resin composition comprising the modified ethylene polymer according to [1].

[3] A laminate comprising an adhesive layer composed of the adhesive resin composition according to [2] and a resin layer provided on at least one surface of the adhesive layer.

[4] The laminate according to [3], wherein the resin layer is composed of at least one kind selected from polyamides and ethylene-vinyl alcohol copolymers.

[5] The laminate according to [3] or [4], which is produced by coextrusion molding method.

[6] The laminate according to [3] or [4], which is produced by injection molding method.

[7] A fuel valve for a plastic fuel tank, in which the laminate according to [3] to [6] is used.

### ADVANTAGEOUS EFFECTS OF THE INVENTION

The modified ethylene polymers of the present invention have undergone a predetermined graft modification and have an elution amount by CFC (cross-fractionation chromatography), an indicator of crystallinity, controlled to be not more than a predetermined range and therefore exhibit excellent adhesion and mechanical strength as well as good fuel barrier property. Use of such modified ethylene polymers in adhesive resin compositions to form an adhesive layer of laminates enables the laminates to have a high adhesive strength with e.g., polyethylene and be excellent in long-term durability and in impact resistance.

With the use of the adhesive resin compositions of the present invention for laminates designed for peripheral members of tanks, those laminates have a high adhesion with gasoline tank members, maintain adhesion strength sufficient even in contact with high-temperature gasoline or light oil, and exhibit long-term durability. Thus, the laminates of the present invention are suitably applicable to peripheral members of tanks, such as valves.

### BRIEF DESCRIPTION OF DRAWING

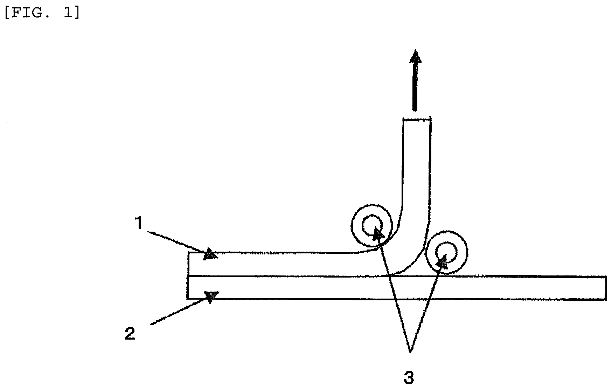

[FIG. 1] A schematic view showing a method of evaluating adhesive force with respect to polyamide in examples.

### DESCRIPTION OF EMBODIMENTS

[Modified ethylene polymer]

The modified ethylene polymer of the present invention is an ethylene polymer, part or whole of which has been graft-modified with an unsaturated carboxylic acid or a derivative thereof.

Examples of the unsaturated carboxylic acid or a derivative thereof include unsaturated carboxylic acids such as acrylic acid, maleic acid, fumaric acid, tetrahydrophthalic acid, itaconic acid, citraconic acid, crotonic acid, isocrotonic acid, and Nadic acid (endocis-bicyclo[2,2,1]hepto-5-ene-2,3-dicarboxylic acid); and derivatives thereof such as acid halides, amides, imides, anhydrides and esters.

Specific examples of the derivatives include malenyl chloride, maleimide, maleic anhydride, citraconic anhydride, monomethyl maleate, dimethyl maleate and glycidyl maleate.

Of these, unsaturated carboxylic acids or acid anhydrides thereof are preferred. Particularly, maleic acid, Nadic acid, or acid anhydrides thereof are preferably used.

The modified ethylene polymer according to the present invention may be produced by various known methods. Specifically, for example, in one method, an ethylene polymer is dissolved in an organic solvent to prepare a solution, and to the solution an unsaturated carboxylic acid or a derivative thereof, and optionally a radical initiator such as an organoperoxide are added. Then, the mixture is allowed to undergo reaction usually at a temperature of 60 to 350°C, preferably 80 to 190°C, for 0.5 to 15 hours, preferably 1 to 10 hours. In another method, with an extruder or the like, in the absence of solvents, an ethylene polymer, an unsaturated carboxylic acid or a derivative thereof and optionally a radical initiator such as an organoperoxide are added, and the mixture is allowed to undergo reaction usually at a temperature of higher than the melting point of the ethylene polymer, preferably 120 to 350°C, for 0.5 to 10 minutes.

An unmodified ethylene polymer serving as a raw material of the modified ethylene polymer according to the present invention is an ethylene homopolymer or a copolymer of ethylene and an $\alpha$-olefin. The $\alpha$-olefin to be copolymerized with ethylene is an $\alpha$-olefin having 3 or more carbon atoms, preferably 3 to 10 carbon atoms, with specific examples including propylene, 1-butene, 1-pentene, 1-hexene, 1-octene, 1-decene, 4-methyl-1-pentene and combination of two or more of these. The copolymerization amount of the $\alpha$-olefin, which is not particularly limited, is usually not more than 10 mol%. The unmodified ethylene polymer is not particularly limited as long as the resultant modified ethylene polymer has a density within a range described below, but desirably has a density of 930 to 980 kg/m$^3$ and MFR of 0.1 to 50 g/10 min.

The unmodified ethylene polymer may be produced by known methods using a known catalyst such as Phillips-type catalysts (chromium-based), Ziegler-type catalysts (titanium-based) and metallocene catalysts. Preferred among those are metallocene catalysts, polymerization in the presence of which provides polymers satisfying the elution amount defined in the present invention.

The modified ethylene polymer has a density of 920 to 960 kg/m$^3$ and a melt flow rate (MFR) as measured in accordance with ASTM D 1238 (190°C, 2160 g load) which is 0.1 to 10 g/10 min, preferably 0.1 to 1.0 g/10 min. The use of the modified ethylene polymers having a density in such a range readily gives compositions with excellent heat-resistant adhesion. By the MFR falling in the above range, compositions with good moldability are obtainable.

The modified ethylene polymer has a ratio of a melt flow rate under 10 kg load (= $I_{10}$) to a melt flow rate under 2.16 kg load (=$I_2$), $I_{10}/I_2$, in accordance with ASTM D 1238 (190°C), fulfills $I_{10}/I_2 \leq 20$.

By the melt flow rate, the density and $I_{10}/I_2$ being in the above ranges, the resultant adhesive resin compositions for multilayer articles around the gasoline tanks have sufficient mechanical strength and are excellent in crack resistance to long-term low stress as well as in injection moldability and blow moldability.

In a favorable modified ethylene polymer, the amount of monomer grafted on the unmodified ethylene polymer is preferably 0.15 to 0.40% by weight, preferably 0.15 to 0.30% by weight, more preferably 0.15 to 0.25% by weight, the graft modification being partially or entirely performed with the unsaturated carboxylic acid or a derivative thereof. When the equivalent weight of the graft monomer is in the above range, the resultant adhesive resin compositions for multilayer articles around the gasoline tanks have sufficient adhesive strength with respect to a gas barrier resin and are excellent in retaining adhesive force even in immersion in gasoline for long periods.

The modified ethylene polymer has an elution amount in o-dichlorobenzene at 80°C or lower, as determined by CFC, which is not more than 10% by weight. The modified ethylene polymers with an elution amount fulfilling the above have little crystallinity change caused by environmental change, hardly swell with respect to e.g., gasoline, have high mechanical strength and adhesive strength at high temperature, and have a gas barrier property stable for long periods. Although reason therefor is indefinite, the decrease in the barrier property is presumed to be related to the characteristics of ethylene polymers, which do not have a uniform crystallinity but have a crystallinity distribution: ethylene polymers having a larger elution amount will contain thick crystals and thin crystals mixed therein, and such ethylene polymers, upon being exposed to elevated environmental temperature, will be deprived of the crystallinity first at the thin crystals and thus come to have a reduced proportion of the crystal components serving as exhibiting a fuel barrier property.

The elution amount at 80°C or lower, as determined by CFC, would be appropriately adjustable by a person skilled in the art, for example by controlling the density, the composition distribution (MFR), the graft amount and the like. The elution amount is adjustable to be not more than 10% by weight, for example by using an ethylene polymer which is produced in the presence of a metallocene catalyst and has a narrow composition distribution.

An excessive elution amount means, in use for multilayer structures, increased swelling with respect to fuel oil such as gasoline, mechanical strength liable to be deprived, and adhesive strength at high temperature potentially deteriorated.

When the modified ethylene polymer is subjected to full notch creep test under 5.5 MPa/80°C hot water in accordance with JIS K 6774, the time to its fracture is in the range of 100 hours or longer. The time to fracture in the creep test falling in the above range means a high resistance to cracks in the modified polyolefin that can occur by long-term low-stress which is accompanied by the deformation of polyethylene gasoline tanks and acts on peripheral members of tanks.

The modified ethylene polymer is used as a material constituting the gas barrier resin peripheral members to be bonded with the polyethylene gasoline tanks. More specifically, the gas barrier resin and the modified ethylene polymer are formed into the peripheral members of tanks by means of injection molding, tube extrusion molding, blow molding or another method, and the modified ethylene polymer part is heated and re-molten such that the peripheral members of tanks are fused to the polyethylene gasoline tanks via the modified ethylene polymer part.

[Adhesive resin composition]

The adhesive resin composition of the present invention comprises the modified ethylene polymer. Desirably, an elution amount of the adhesive resin composition of the present invention is on the same level with the elution amount of the modified ethylene polymer of the present invention.

The adhesive resin composition of the present invention may contain an unmodified ethylene polymer having a density of 930 to 980 kg/m$^3$. When the unmodified ethylene polymer is contained, the unmodified ethylene polymer preferably accounts for not more than 30% by weight with respect to 100% by weight of the total of the modified ethylene polymer and the unmodified ethylene polymer. The unmodified ethylene polymer is preferably an unmodified ethylene polymer polymerized in the presence of a metallocene catalyst in order for the elution amount of the adhesive resin composition of the present invention to be adjusted to be in the desired range. When the unmodified ethylene polymer is added, the adjustment method described above is likewise adoptable.

The adhesive resin composition of the present invention may optionally contain common additives such as antioxidants, weather stabilizers, antistatic agents, antifogging agents, antiblocking agents, lubricants, nucleating agents and pigments, other polymers, rubbers or the like, in a range not detrimental to the object of the present invention.

The adhesive resin composition of the present invention preferably has an Izod impact strength as measured in accordance with ASTM D 256 under -40°C atmosphere of 10 kJ/m$^2$ or more, preferably 12 kJ/m$^2$ or more. The adhesive resin compositions having an Izod impact strength under -40 °C atmosphere in the above range give multilayer structures having a high low-temperature drop impact resistance.

The adhesive resin composition of the present invention may be produced by various known methods . For example, in one method, the modified ethylene polymer is dry-blended in the above range with a Henschel mixer, a tumbler blender, a V-blender or the like. In another method, after dry blending, the mixture is melt kneaded with a monoaxial extruder, a multiaxial extruder, a Banbury mixer or the like. In still another method, the components are stirred and mixed in the presence of a solvent.

[Laminate]

The laminate of the present invention comprises an adhesive layer (A) formed from the adhesive resin composition and a resin layer (B) formed on at least one surface of the adhesive layer (A). On the other surface of the adhesive layer (A), a resin layer (C) which may be the same or different from the resin layer (B) may be formed.

The resin layer (B) is composed of a gas barrier resin, wherein the gas barrier resin refers to a resin having a lower gasoline permeability than a polyolefin. Specific examples of the resin include polyamide resins and ethylene·vinyl alcohol copolymers.

Polyamide resins preferably used are specifically nylon 6, nylon 66, nylon 610, nylon 11, nylon 12, MXD nylon, amorphous nylon, terephthalic acid/adipic acid/hexamethylenediamine copolymer or the like.

Ethylene·vinyl alcohol copolymers preferably used are copolymers containing ethylene in an amount of 20 to 50 mol%.

The resin layer (C) may contain a polyethylene resin or the like. Examples thereof include ethylene homopolymer, or random copolymers of ethylene and an α-olefin. Usually, the amount of the α-olefin to be copolymerized, which is not particularly restricted as long as the density of the polyethylene resin falls within a range mentioned below, is preferably not more than 10 mol%, more preferably not more than 5 mol%. The α-olefin is preferably an α-olefin having 3 to 10 carbon atoms, with its specific examples including propylene, 1-butene, 1-hexene, 4-methyl-1-pentene, 1-octene and 1-decene.

The polyethylene resin preferably has a melt flow rate (MFR) [ASTM D 1238 (temperature: 190 °C, load: 2160 g load)] of 0.01 to 3.0 g/10 min, more preferably 0.05 to 1.5 g/10 min; and preferably has a density of 0.940 to 0.980 g/cm$^3$, more preferably 0.950 to 0.970 g/cm$^3$. By using such a polyethylene resin for the resin layer (C), large-sized multilayer structures having a high impact strength can be obtained with an excellent moldability.

The layers (A), (B) and (C), which can constitute the laminate of the present invention, may contain known additives such as fillers, stabilizers, lubricants, antistatic agents, flame retardants and foaming agents in a range not detrimental to the object of the present invention.

The laminate of the present invention may be produced by a known method without any particular restriction, for example by coextrusion molding method. The coextrusion molding method, which is not particularly restricted, may be a known coextrusion molding method such as a coextrusion multilayer dice method involving the use of multiple extruders for melt extrusion, and a feed block method.

The coextrusion molding may be performed under conditions which are not particularly restricted: for example, the resin constituting the layer (A) and the resin constituting the layer (B) are heated to not lower than temperature at which they are molten, melt-extruded through the extruder, and cooled such that a desired temperature will be reached.

By the laminate being produced by means of the coextrusion molding in embodiments of the present invention, the layer (A) is strongly bonded with the layer (B). The laminate to be produced by the coextrusion molding, due to being producible in a single step, is excellent in productivity.

Exemplary lamination methods include a method, generally called extrusion lamination method, in which films are extruded for coating through an extruder equipped with a spinneret such as a coathanger die, a T-die, or an I-die; a method in which an adhesive film (A) formed beforehand is thermally compression-bonded with a nip roll on a resin film (B) that has been heated to not lower than a temperature at which the film (A) is softened; and an injection molding in which into a mold having an adhesive film (A) or a resin film (B) placed therein the resin constituting the resin layer (B) or the resin constituting the adhesive layer (A) is introduced, and the introduction is followed by heating and cooling steps to provide a laminate. Such an injection molding method, too, is suitably adoptable in the present invention.

The modified ethylene polymers constituting the laminates of the present invention have undergone the predetermined graft modification, and have an elution amount as measured at 80°C or lower by CFC which is controlled to be not more than the predetermined range, and therefore are excellent in adhesion and in mechanical strength as well as exhibit good fuel-barrier property. It is considered that an adhesive force, in particular, is attributed not just to molecular interaction between an adhesive and an adherend but also to mechanical strength of a base resin. Increase in the modification degree is expected in some cases to lead to increasing the molecular interaction and yet to greatly affecting the crystal structure from which the mechanical strength of the base resin originates, which results in decrease in mechanical strength of the adhesive layer. At the weight range of the graft monomer of the modified ethylene polymer of the present invention, surprisingly, the mechanical strength of the structure of the base resin makes more contribution to the adhesive strength than the modification degree does, which is believed to be a reason for the relatively high adhesive strength in spite of the low modification degree. Thus, use of such modified ethylene polymers in the adhesive resin compositions to form the adhesive layer of the laminates enables the laminates to have high adhesive strength as well as adhesive strength exhibited after contact with gasoline or light oil and to be excellent in long-term durability and in impact resistance.

Generally in polymer welding, surfaces to be bonded are often brought into contact with and pressed to one another. In many applications, the attempt to weld different kinds of polymers together usually involves the bonding between those different kinds of members that is poor or unsuccessful.

By contrast, in the laminate of the present invention, where the specific modified ethylene polymer forms the adhesive layer of the laminate, favorable bonding is attained. The bonding attained is not just strong but also involves little leakage (of liquid and gas) to provide satisfactory sealing performance, and makes it possible to provide, particularly, systems handling liquid and/or gas under pressure and/or vacuum.

Bodies of automobile fuel tanks are often made of polyethylene in view of low cost and physical strength. According to the present invention, solid bonding with polyethylene is made possible. Thus, the laminate of the present invention is suitably applicable to fuel tank peripheral members such as fuel valves, fixing equipment for fuel systems, fuel pipes (those with rigidity and those with plasticity), fuel gauge members, fuel injectors, fuel pumps and components of those products, and suited particularly for fuel valves.

## EXAMPLES

The present invention is described in more detail with reference to Examples, but the present invention is in no way limited to these Examples, unless going beyond the summary of the present invention.

In Examples and Comparative Examples, properties were measured in the methods described below.

(1) MFR (g/10 min)

MFR was measured in accordance with ASTM D 1238 at a temperature of 190°C under a load of 2160 g.

(2) Density (kg/m$^3$)

Density was measured in accordance with ASTM D 1505.

(3) Elution amount at 80°C or lower (g)

Elution amount at 80°C or lower was measured by cross-fractionation chromatography (CFC).
A proportion of components soluble in o-dichlorobenzene at 80°C or lower (% by weight) was determined by performing CFC under conditions described below.
- Device: cross-fractionation chromatograph CFC2 (Polymer ChAR),
- Detector (built-in): infrared spectrophotometer IR4 (Polymer ChAR),
- Wavelength for detection: 3.42 $\mu$m (2,920 cm-1); fixed,
- Sample concentration: 120 mg/30 mL, Injection amount: 0.5 mL,
- Temperature decrease time: 1.0°C /min,
- Elution fraction: an interval of 4.0°C (-20°C to 140°C),
- GPC column: Shodex HT-806M $\times$ 3 (Showa Denko K.K.),
- GPC column temperature: 140°C, GPC column calibration: monodispersed polystyrene (Tosoh Corporation),
- Molecular weight calibration method: general calibration method (in terms of polystyrene),
- Mobile phase: o-dichlorobenzene (BHT added), flow rate: 1.0 mL/min.

(4) Full notch creep

A full notch creep test was performed in accordance with ISO 16770. Specifically, a test piece with a length of 40 mm cut out from a press-molded sheet with a thickness of 6 mm was provided, and a notch with a depth of 1 mm was made at a full circumference of the center part of the test piece by using a predetermined jig. Under the atmosphere of a hot water of 80°C, a constant load of 5.0 MPa was applied on the test piece. The time to its fracture was measured.

(5) Adhesive strength with respect to polyamide after immersion in fuel (N/10 mm)

An adhesive strength after immersion in fuel was measured in the following manner. A sample of 10 mm width was cut out from a side surface of a laminate, and was immersed in Fuel-C at 65°C (isooctane/toluene weight ratio = 50/50) for 200 hours, and thereafter an adhesive strength between the adhesive layer (A) and the resin layer (B) was measured in a thermostat bath at room temperature (23°C).
In examples, a sample for evaluation of adhesive force was manufactured with an injection molding machine. Specifically, the modified ethylene polymer of Example or of Comparative Example was subjected to injection molding at 200°C to give a resin strip having a width of 12 mm, a length of 130 mm and a thickness of 3 mm. Thereafter, the modified ethylene polymer strip was inserted into a mold different from the mold used above, and onto the modified ethylene polymer, a polyamide resin (PA6) was injected at 280°C. In this way, a modified ethylene polymer/polyamide test piece for evaluation of adhesive force which had a width of 12 mm, a length of 130 mm and a thickness of 6 mm (modified ethylene polymer/polyamide = 3 mm/3 mm) was obtained.
The modified ethylene polymer layer of the test piece for evaluation of adhesive force was peeled at an angle of 90° at a tensile rate of 50 mm/min to evaluate the adhesive force between the modified ethylene polymer and the polyamide resin (see FIG. 1) .

(6) Fuel permeability coefficient

An SUS container with a volume of 20 mL (the area of its open part: 1.26 $\times$ 10$^{-3}$m$^2$) was loaded with 18 mL of Fuel-C, a model fuel, and had a press-molded sheet-like test piece with a thickness of 2 mm placed in the open part of the container before tightly closed. A test specimen was thus prepared. A weight of the test specimen, put in a thermostat device (65°C), was measured, and when a weight loss per unit time reached constant, a fuel permeability coefficient was determined from an equation below.

[Numeral 1]

```
Fuel permeability coefficient (g·mm/m²·day) =

        [weight lost (g)] × [sheet thickness (mm)] /

        {[area of open part 1.26 × 10⁻³ (m²)] × [measurement interval

(day)]}
```

[Example 1]

A high density polyethylene having density = 951 kg/m$^3$ and MFR = 0.27 g/10 min produced in the presence of a metallocene catalyst was melt graft-modified with maleic anhydride 0.22 g/100 g in an extruder. A modified ethylene polymer (MFR = 0.27 g/10 min: density = 951 kg/cm$^3$) thus prepared was evaluated in (1) to (6) described above by the above-mentioned methods.

[Example 2]

A high density polyethylene having density = 951 kg/m$^3$ and MFR = 0.27 g/10 min produced in the presence of a metallocene catalyst which was melt graft-modified with maleic anhydride 0.15 g/100 g in an extruder. A modified ethylene polymer (MFR = 0.26 g/10 min: density = 951 kg/cm$^3$) thus prepared was evaluated in the same manner as in Example 1.

[Example 3]

A high density polyethylene having density = 951 kg/m$^3$ and MFR = 0.27 g/10 min produced in the presence of a metallocene catalyst was melt graft-modified with maleic anhydride 0.30 g/100 g in an extruder. A modified ethylene polymer (MFR = 0.30 g/10 min: density = 951 kg/cm$^3$) thus prepared was evaluated in the same manner as in Example 1.

[Comparative Example 1]

A high density polyethylene having density = 951 kg/m$^3$ and MFR = 0.11 g/10 min produced in the presence of a Ziegler catalyst was melt graft-modified with maleic anhydride 0.22 g/100 g in an extruder. A modified ethylene polymer (MFR = 0.12 g/10 min: density = 951 kg/cm$^3$) thus prepared was evaluated in the same manner as in Example 1.

[Comparative Example 2]

A high density polyethylene having density = 951 kg/m$^3$ and MFR = 0.27 g/10 min produced in the presence of a metallocene catalyst was melt graft-modified with maleic anhydride 0.11 g/100 g in an extruder. A modified ethylene polymer (MFR = 0.25 g/10 min: density = 951 kg/cm$^3$) thus prepared was evaluated in the same manner as in Example 1.

[Comparative Example 3]

A high density polyethylene having density = 951 kg/m$^3$ and MFR = 0.27 g/10 min produced in the presence of a metallocene catalyst was melt graft-modified with maleic anhydride 0.44 g/100 g in an extruder. A modified ethylene polymer (MFR = 0.32 g/10 min: density = 951 kg/cm$^3$) thus prepared was evaluated in the same manner as in Example 1.

Results are shown in Table 1.

[Table 1]

| Properties | Unit | Test method | Ex. 1 | Ex. 2 | Ex. 3 | Comp. Ex. 1 | Comp. Ex. 2 | Comp. Ex. 3 |
|---|---|---|---|---|---|---|---|---|
| MFR (190°C) | g/10 min | ASTMD 1238 | 0.27 | 0.26 | 0.30 | 0.12 | 0.25 | 0.32 |

(continued)

| Properties | Unit | Test method | Ex. 1 | Ex. 2 | Ex. 3 | Comp. Ex. 1 | Comp. Ex. 2 | Comp. Ex. 3 |
|---|---|---|---|---|---|---|---|---|
| Density | kg/m$^3$ | ASTMD 1505 | 951 | 951 | 951 | 951 | 951 | 951 |
| Modification degree | wt% | - | 0.22 | 0.15 | 0.30 | 0.22 | 0.11 | 0.44 |
| Elution amount at 80°C or lower by CFC | wt% | - | 4.9 | 4.2 | 6.1 | 12.5 | 3.8 | 7.1 |
| Full notch creep (5.0 MPa/80°C) | Hr | ISO 16770 | >1000 | >1000 | >1000 | >1000 | >1000 | 700 |
| Adhesive force with respect to PA | N/cm | - | 110 | 100 | 105 | 32 | 74 | 83 |
| Fuel permeability coefficient (Fuel-C/ 65°C) | g·mm/m$^2$·day | Cup method | 220 | 210 | 230 | 410 | 200 | 250 |

REFERENCE SIGNS LIST

1: modified ethylene polymer
2: polyamide
3: roller

## Claims

1. A modified ethylene polymer in which at least part of the ethylene polymer is graft-modified with an unsaturated carboxylic acid or a derivative thereof, wherein the modified ethylene polymer has a graft modification of 0.15% by weight to 0.40% by weight, and has an elution amount in o-dichlorobenzene at 80°C or lower as determined by cross-fractionation chromatography that is not more than 10% by weight, and
wherein at least part of the ethylene polymer is obtained by polymerization performed in the presence of a metallocene catalyst.

2. An adhesive resin composition comprising the modified ethylene polymer according to claim 1.

3. A laminate comprising an adhesive layer composed of the adhesive resin composition according to claim 2 and a resin layer provided on at least one surface of the adhesive layer.

4. The laminate according to claim 3, wherein the resin layer is composed of at least one kind selected from polyamides and ethylene-vinyl alcohol copolymers.

5. The laminate according to claim 3 or 4, which is produced by coextrusion molding method.

6. The laminate according to claim 3 or 4, which is produced by injection molding method.

7. A fuel valve for a plastic fuel tank, in which the laminate according to any one of claims 3 to 6 is used.

## Patentansprüche

1. Modifiziertes Ethylenpolymer, bei dem mindestens ein Teil des Ethylenpolymers mit einer ungesättigten Carbonsäure oder einem Derivat davon pfropfmodifziert ist, wobei das modifizierte Ethylenpolymer eine Pfropfmodifizierung von 0,15 Gewichts-% bis 0,40 Gewichts-% aufweist und eine Elutionsmenge in o-Dichlorbenzol bei 80 °C oder weniger, bestimmt durch Kreuzfraktionierungschromatographie, von nicht mehr als 10 Gewichts-% aufweist und wobei mindestens ein Teil des Ethylenpolymers durch Polymerisation, durchgeführt in Gegenwart eines Metallocenkatalysators, erhalten wird.

2. Klebharzzusammensetzung, umfassend das modifizierte Ethylenpolymer gemäß Anspruch 1.

3. Laminat, umfassend eine Klebstoffschicht, bestehend aus der Klebharzzusammensetzung gemäß Anspruch 2 und einer Harzschicht, die auf mindestens einer Oberfläche der Klebstoffschicht angebracht ist.

4. Laminat gemäß Anspruch 3, wobei die Harzschicht aus mindestens einer Spezies, ausgewählt aus Polyamiden und Ethylen-Vinylalkohol-Copolymeren, besteht.

5. Laminat gemäß Anspruch 3 oder 4, das durch ein Strangpressverfahren hergestellt wird.

6. Laminat gemäß Anspruch 3 oder 4, das durch ein Spritzgussverfahren hergestellt wird.

7. Kraftstoffventil für einen Kunststoff-Kraftstofftank, in dem das Laminat gemäß einem beliebigen der Ansprüche 3 bis 6 verwendet wird.

**Revendications**

1. Polymère d'éthylène modifié dans lequel au moins une partie du polymère d'éthylène est modifiée par greffage avec un acide carboxylique insaturé ou un dérivé de celui-ci, dans lequel le polymère d'éthylène modifié présente une modification par greffage de 0,15 % en poids à 0,40 % en poids, et présente une quantité d'élution dans l'o-dichlorobenzène à 80 °C ou moins telle que déterminée par chromatographie par fractionnement croisé qui n'est pas supérieure à 10 % en poids, et
dans lequel au moins une partie du polymère d'éthylène est obtenue par une polymérisation effectuée en présence d'un catalyseur métallocène.

2. Composition de résine adhésive comprenant le polymère d'éthylène modifié selon la revendication 1.

3. Stratifié comprenant une couche adhésive composée de la composition de résine adhésive selon la revendication 2 et une couche de résine fournie sur au moins une surface de la couche adhésive.

4. Stratifié selon la revendication 3, dans lequel la couche de résine est composée d'au moins un type sélectionné parmi les polyamides et les copolymères d'éthylène-alcool vinylique.

5. Stratifié selon la revendication 3 ou 4, qui est produit par un procédé de moulage par coextrusion.

6. Stratifié selon la revendication 3 ou 4, qui est produit par un procédé de moulage par injection.

7. Vanne de carburant pour un réservoir de carburant en plastique, dans laquelle le stratifié selon l'une quelconque des revendications 3 à 6 est utilisé.

[FIG. 1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2690150 A1
- US 20070241557 A1
- EP 0834415 A2
- EP 0896026 A1
- JP H10156978 A
- JP 2004293324 A